# EUROPEAN PATENT APPLICATION

(11) **EP 1 003 113 A2**
(43) Date of publication of application: **24.05.2000**
(21) Application number: 99309237.8
(22) Date of filing: 19.11.1999
(51) Int. Cl.: G06F 17/50

(54) **Designing an assembly of curved structures having composite laminate plies**

(30) Priority: 19.11.1998 US 196422
(71) Applicant: General Electric Company, Schenectady, NY 12345 (US)
(72) Inventor: Laskaris, Evangelos Trifon, Schenectady, New York 12309 (US); Nagendra, Somanath, Niskayuna, New York 12309 (US)
(74) Representative: Goode, Ian Roy

(57) **Abstract**

A method for designing an assembly (28) made up of one or more curved structures (10, 30, 32, and 34), such as cylinders, consisting essentially of composite laminate plies each having an angular orientation. The assembly is modeled in a digital computer program which calculates responses of the assembly to predetermined loads based on values of the orientation of each ply. Values for the angular orientation of each ply are determined from a genetic algorithm for composites which performs genetic operations, such as permutation, on previous values until acceptable responses are obtained from the computer program. The method is extended to geometrically divide the assembly into sections and to determine the number of plies in each section.

## Description

The present invention relates generally to curved structures having composite laminate plies, and more particularly to designing an assembly of one or more of such structures including optimizing the orientation or optimizing the number and orientation of the plies.

An assembly of one or more curved structures includes, without limitation, annular right-circular cylinders and rings and portions thereof, wherein rings are just short cylinders. Composite annular cylinders are known which are made up of composite laminate plies. Laminate plies are layers of material, and composites are materials having fibers embedded in a matrix such as a material consisting essentially of carbon fiber filaments embedded in an epoxy matrix.

In some constructions, the fiber filaments in each ply or layer are short in length and have random orientations. Basically, an assembly of one or more annular cylinders would be designed, with such random-oriented short fibers, beginning with a choice of materials. Then, the number of plies needed to meet strength and size requirements of the assembly would be determined by conventional engineering analysis.

In other constructions, the fiber filaments in each ply or layer are long in length and have the same orientation. It is known that the orientation of the fiber filaments in the assembly affects the responses of the assembly to loads such as, but not limited to, buckling loads, thermal loads, etc. An assembly of one or more annular cylinders, having such identically-oriented long fibers in a ply, can have each cylinder be made starting with a thread or tow consisting essentially of one or more long fibers surrounded by the matrix, then winding the thread around a mandrel, then heat-curing the wound thread to bond together adjacent threads and plies, and finally removing the mandrel. The annular cylinder has a number of plies, each ply has a number of windings or turns of the thread, and the fiber in each turn of a ply has an identical angular orientation on the surface of the ply, such angular orientation being measured with respect to the longitudinal axis of the cylinder. The fiber orientation of each ply is made the same for each ply or is determined for each ply by previous experience. It is noted that radially-adjacent cylinders in an assembly would be adhesively bonded together.

A method is known to design a plate or panel structure (i.e., a flat structure) having composite laminate plies by determining the angular orientation of each ply. This method includes modeling the plate structure in a digital computer program which calculates responses of the plate to predetermined loads on the plate depending on the angular orientations of the plies or layers. This method then determines values for the angular orientation of each the ply using a genetic algorithm for composites which performs the genetic operations of permutation, crossover, and mutation first on preselected initial values and thereafter on last-determined values of the angular orientation of each ply. This method repeats these steps until the responses are acceptable and then chooses design values for the angular orientation of each ply which correspond to the acceptable responses. This method has been extended to determine the number and angular orientation of each ply and applied to the design of a plate structure having reinforcing ribs or longitudinal stiffeners. Designs using this known method tend to be about five percent lighter than designs based on previous methods.

What is needed is an improved method for designing an assembly of one or more curved structures.

According to the present invention, there is provided a first method for designing an assembly of one or more curved structures, wherein the curved structures consist essentially of composite laminate plies and wherein each ply has an angular orientation, includes steps a) through e). Step a) includes modeling the assembly in a digital computer program which calculates responses of the assembly to predetermined loads on the assembly based on generalized shell theory with shear deformation. The predetermined loads and the values of the angular orientation of each ply are program inputs, and the responses are program outputs. Step b) includes determining values for the angular orientation of each ply from a genetic algorithm for composites which performs genetic operations of permutation, crossover, and mutation first on preselected initial values and thereafter on last-determined values of the angular orientation of each ply. Step c) includes running the computer program from step a) with the values from step b). Step d) includes repeating steps b) and c) until the responses are acceptable. Step e) includes choosing as the design of the assembly the values of the angular orientation of each ply which correspond to the acceptable responses. In one implementation, the genetic operations of step b) also include at least three (and preferably, but not necessarily, five) different genetic operations chosen from a supplemental genetic operations list consisting of division, stack, swap, adhesion, and aggregation.

A second method of the invention for designing an assembly of one or more curved structures, wherein the curved structures consist essentially of composite laminate plies and wherein each ply has an angular orientation, includes steps a) through f). Step a) includes geometrically dividing the assembly into sections, wherein a single section has the same number of plies, and wherein contiguous sections have different numbers of plies. Step b) includes modeling the assembly in a digital computer program which calculates responses of the assembly to predetermined loads on the assembly based on generalized shell theory with shear deformation. The predetermined loads, the number of plies in each section, and the values of the angular orientation of each ply are program inputs, and the responses are program outputs. Step c) includes determining a number of plies in each section and values for the angular orientation of each ply from a genetic algorithm for composites which performs genetic operations of permutation, crossover, and mutation first on a preselected initial number of plies in each section and on preselected initial values of the angular orientation of each ply and thereafter on a last-determined number of plies in each section and on last-determined values of the angular orientation of each ply. Step d) includes running the computer program from step b) with the number of plies in each section and the values for the angular orientation of each ply from step c). Step e) includes repeating steps c) and d) until the responses are acceptable. Step f) includes choosing as the design of the assembly the number of plies in each section and the values of the angular orientation of each ply which correspond to the acceptable responses. In one implementation, the genetic operations of step c) also include at least three (and preferably, but not necessarily, five) different genetic operations chosen from a supplemental genetic operations list consisting of division, stack, swap, adhesion, and aggregation.

Several benefits and advantages are derived from the invention. Using genetic algorithms to design composite laminate ply assemblies of one or more curved structures finds global optimum values for ply orientation or ply number and orientation. Using the additional three to five genetic operations of the supplemental list of the invention (instead of the basic three from the genetic algorithm of the known design method for plates) will increase the number of times true global optimum values are found to a near certainty and will find such true global optimum values faster. Conventional design techniques for curved structures have a tendency to find local optimum values (and miss the better global optimum value) for ply orientation or ply number and orientation. Based on computer engineering analysis, the method of the invention yields a design for an assembly of five annular cylinders (including rings) used to support superconductive coils for a magnetic resonance imaging (MRI) system which tends to be up to fifteen percent lighter than designs obtained from conventional methods. Such lighter MRI designs means less size and cost to meet design requirements of buckling loads, thermal loads, etc.

Embodiments of the invention will now be described, by way of example, with reference to the accompanying drawings, in which:
Figure 1 is a schematic side elevational view of a composite laminate ply cylinder showing the outside ply or layer with its adjacent windings or turns of composite thread oriented at a plus forty-five degree angle with respect to the longitudinal axis of the cylinder;
Figure 2 is an above-axis portion of a cross sectional view of the cylinder of Figure 1 taken along lines 2-2 of Figure 1 showing the windings or turns of the thread of three plies or layers of the cylinder;
Figure 3 is a cross sectional view of an assembly of four cylinders (including rings) in which the plies or layers of each cylinder have been omitted for clarity;
Figure 4 is a flow chart (i.e., block diagram) of a first implementation of the method of the invention which determines values of the ply orientations for an assembly of one or more curved composite-laminate-ply structures; and
Figure 5 is a flow chart (i.e., block diagram) of a second implementation of the method of the invention which determines the number of plies and values of the ply orientations for an assembly of one or more curved composite-laminate-ply structures.

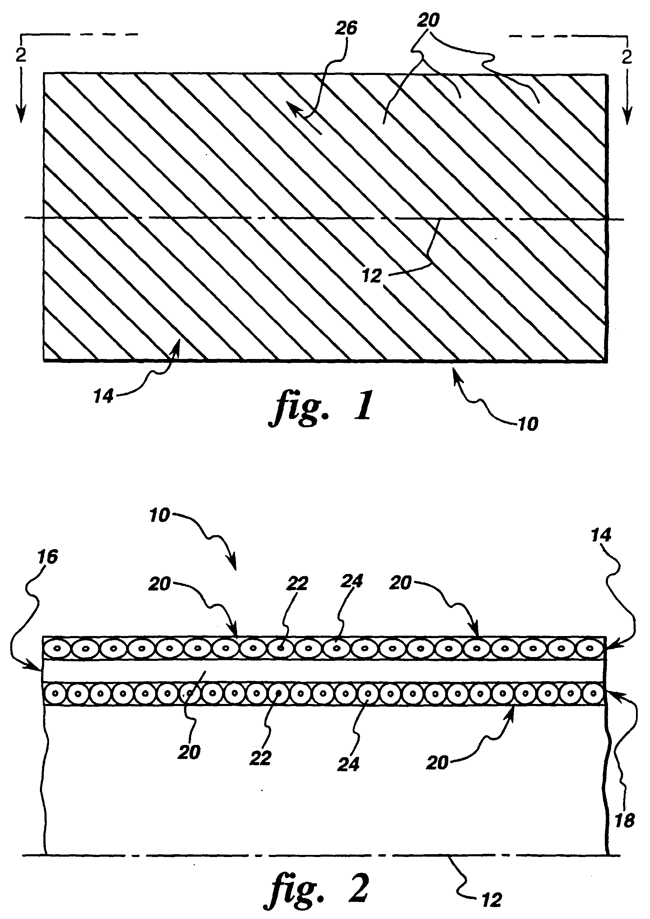

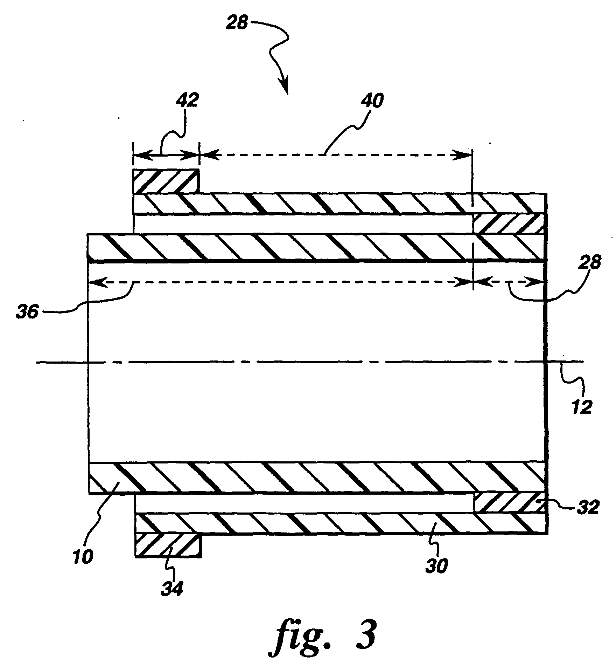

An annular right-circular cylinder 10 is shown in Figures 1 and 2. Figure 1 shows generally the exterior of the cylinder 10. The cylinder 10 has a longitudinal axis 12 and consists essentially of composite laminate plies 14, 16, and 18 (only three of which are shown in Figure 2). Figure 1 shows more particularly the exterior ply 14 of the cylinder 10. Each ply 14, 16, and 18 is an array of adjacent threads or tows 20. Each thread or tow 20 of a ply 14, 16, or 18 has one or more fibers 22 (e.g., one or more carbon fiber filaments) which are surrounded by a matrix 24 (e.g., an epoxy matrix) and which are aligned generally parallel to the thread or tow's lengthwise direction 26. The angular orientation of the exterior ply 14 with respect to the longitudinal axis 12 is forty-five degrees and is defined to be plus forty-five degrees. The other plies 16 and 18 each have an angular orientation chosen from the list consisting of zero degrees (i.e., aligned with the longitudinal axis 12), plus forty-five degrees, minus forty-five degrees, and ninety degrees. More specifically, the angular orientation of ply 16 is zero degrees, and the angular orientation of ply 18 is ninety degrees. An assembly 28 of curved structures is shown in Figure 3. Here, the assembly 28 consists essentially of four curved structures which are two annular right-circular cylinders 10 and 30 and two rings 32 and 34, wherein it is noted that a ring is simply a short cylinder. Adjacent cylinders and rings are adhesively bonded together. One use for the assembly 28 is to support superconductive coils (not shown) for a magnetic resonance imaging (MRI) system.

A first implementation of the method of the invention is for designing an assembly 28 of one or more curved structures 10, 30, 32, and 34, wherein the curved structures 10, 30, 32, and 34 consist essentially of composite laminate plies 14, 16, and 18, and wherein each ply has an angular orientation. When the assembly 28 consists of at least two curved structures, typically adjacent curved structures are adhesively bonded together. The curved structures are not limited to annular cylinders and rings and further include, without limitation, solid cylinders, annular and solid cones and portions of cylinders, rings, and cones. Likewise, the prechosen set of possible discrete angular orientations for the plies is not limited to zero, plus or minus forty-five, and ninety degrees and other or additional angles may be chosen by the artisan. It is noted that the method is not limited to a particular way of making a ply or curved structure. The first implementation of the method of the invention includes steps a) through e).

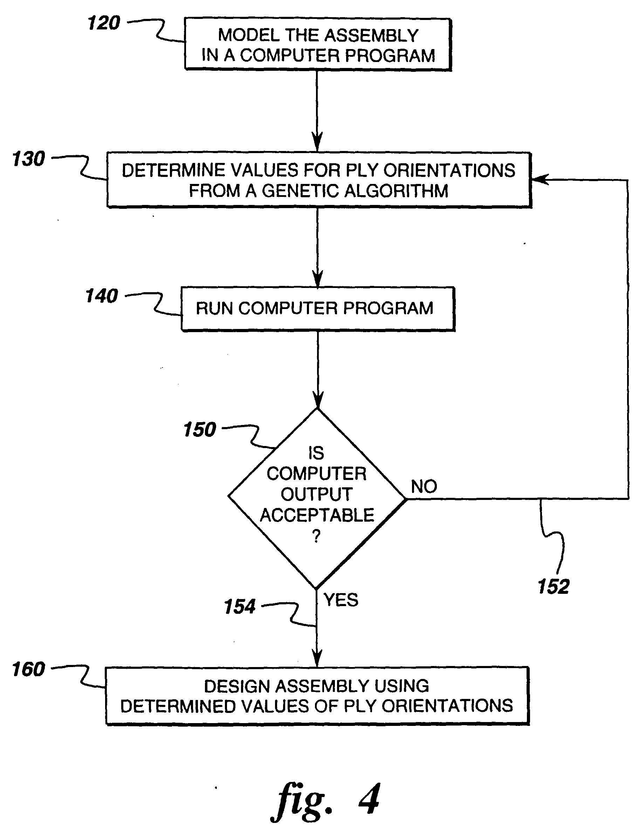

Step a) is shown in Figure 4 as block 120 entitled "Model the assembly in a computer program". Step a) includes modeling the assembly 28 in a digital computer program which calculates responses of the assembly 28 to predetermined loads on the assembly 28 based on generalized shell theory with shear deformation, wherein the predetermined loads and the values of the angular orientation of each ply 14, 16, and 18 are program inputs, and wherein the responses are program outputs. An example of such a computer program is "STAGS" available from NASA Langley or Lockheed Martin.

Step b) is shown in Figure 4 as block 130 entitled "Determine values for ply orientations from a genetic algorithm". Step b) includes determining values for the angular orientation of each ply 14, 16, and 18 from a genetic algorithm for composites which performs genetic operations of permutation, crossover, and mutation first on preselected initial values and thereafter on last-determined values of the angular orientation of each ply. An example of such a genetic algorithm, including a description of permutation, crossover, and mutation, is described in chapters four and five of "Optimal Stacking Sequence Design of Stiffened Composite Panels with Cutouts" by Somanath Nagendra et al., Report Number CCMS-94-07 published July 1994 by the Center for Composite Materials and Structures of Virginia Polytechnic Institute and State University in Blacksburg, Virginia.

Step c) is shown in Figure 4 as block 140 entitled "Run computer program". Step c) includes running the computer program from step a) with the values from step b).

Step d) is shown in Figure 4 as block 150 entitled "Is computer output acceptable?" together with flow chart lines 152 and 154 which exit block 150. Step d) includes repeating steps b) and c) until the responses are acceptable, as predefined by the artisan.

Step e) is shown in Figure 4 as block 160 entitled "Design assembly using determined values of ply orientations". Step e) includes choosing as the design of the assembly 28 the values of the angular orientation of each ply 14, 16, and 18 which correspond to the acceptable responses.

In a first variation of the first implementation of the method of the invention, the assembly 28 consists essentially of at least two curved structures 10, 30, 32, and 34, and the at least two curved structures are generally right-circular annular cylinders 10, 30, 32, and 34. It is noted that the rings 32 and 34 are simply short cylinders. In a second variation, the genetic operations of step b) also include at least three different genetic operations chosen from a supplemental genetic operations list consisting of division, stack, swap, adhesion, and aggregation, descriptions of which are found near the end of the specification. In a third variation, the genetic operations of step b) also include at least four different genetic operations chosen from the previously-described supplemental genetic operations list. In a fourth variation, the genetic operations of step b) also include at least five different genetic operations chosen from the previously-described supplemental genetic operations list. In a fifth variation, the genetic algorithm of step b) creates a family of plies having a predetermined number of members in the family, wherein each member has plies whose angular orientations are determined from the initial values of step b) by performing the genetic operations of step b) on the initial values, wherein steps b) and c) are performed for each member, wherein step d) repeats steps b) and c) until responses are acceptable for a prechosen number of members, and wherein step e) chooses as the design of the assembly one of the members having acceptable responses.

A second implementation of the method of the invention is for designing an assembly 28 of one or more curved structures 10, 30, 32, and 34, wherein the curved structures 10, 30, 32, and 34 consist essentially of composite laminate plies 14, 16, and 18, and wherein each ply has an angular orientation. When the assembly 28 consists of at least two curved structures, typically adjacent curved structures are adhesively bonded together. The curved structures are not limited to annular cylinders and rings and further include, without limitation, solid cylinders, annular and solid cones and portions of cylinders, rings, and cones. Likewise, the prechosen set of possible discrete angular orientations for the plies is not limited to zero, plus or minus forty-five, and ninety degrees and other or additional angles may be chosen by the artisan. It is noted that the method is not limited to a particular way of making a ply or curved structure. The second implementation of the method of the invention includes steps a) through e).

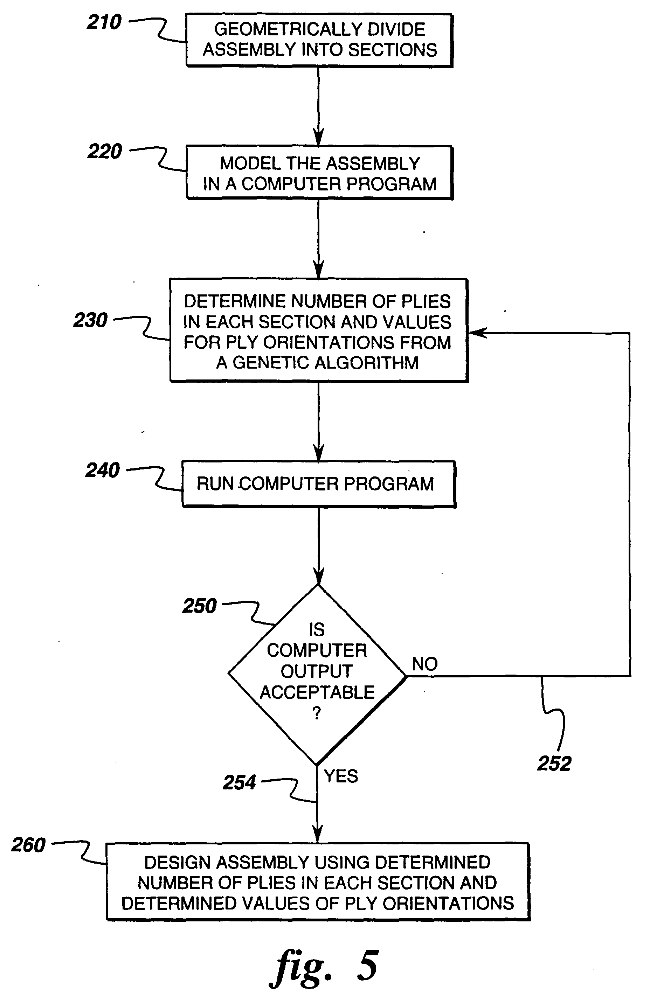

Step a) is shown in Figure 5 as block 210 entitled "Geometrically divide assembly into sections". Step a) includes geometrically dividing the assembly 28 into sections 36, 38, 40, and 42, wherein each section is shown as a double-arrowheaded dashed line in Figure 3. A single section has the same number of plies 14, 16, and 18, and contiguous sections 36 and 38, 38 and 40, and 40 and 42 have different numbers of plies.

Step b) is shown in Figure 5 as block 220 entitled "Model the assembly in a computer program". Step b) includes modeling the assembly 28 in a digital computer program which calculates responses of the assembly 28 to predetermined loads on the assembly 28 based on generalized shell theory with shear deformation, wherein the predetermined loads, the number of plies in each section 36, 38, 40, and 42 and the values of the angular orientation of each ply 14, 16, and 18 are program inputs, and wherein the responses are program outputs. An example of such a computer program is "STAGS" available from NASA Langley or Lockheed Martin.

Step c) is shown in Figure 5 as block 230 entitled "Determine number of plies in each section and values for ply orientations from a genetic algorithm". Step c) includes determining a number of plies in each section 36, 38, 40, and 42 and values for the angular orientation of each ply 14, 16, and 18 from a genetic algorithm for composites which performs genetic operations of permutation, crossover, and mutation first on a preselected initial number of plies in each section and on preselected initial values of the angular orientation of each ply and thereafter on a last-determined number of plies in each section and on last-determined values of the angular orientation of each ply. An example of such a genetic algorithm, including a description of permutation, crossover, and mutation, is described in chapters four and five of "Optimal Stacking Sequence Design of Stiffened Composite Panels with Cutouts" by Somanath Nagendra et al., Report Number CCMS-94-07 published July 1994 by the Center for Composite Materials and Structures of Virginia Polytechnic Institute and State University in Blacksburg, Virginia.

Step d) is shown in Figure 5 as block 240 entitled "Run computer program". Step d) includes running the computer program from step b) with the number of plies in each section 36, 38, 40, and 42 and the values for the angular orientation of each ply 14, 16, and 18 from step c).

Step e) is shown in Figure 5 as block 250 entitled "Is computer output acceptable?" together with flow chart lines 252 and 254 which exit block 250. Step e) includes repeating steps c) and d) until the responses are acceptable, as predefined by the artisan.

Step f) is shown in Figure 5 as block 260 entitled "Design assembly using determined number of plies in each section and determined values of ply orientations". Step f) includes choosing as the design of the assembly 28 the number of plies in each section 36, 38, 40, and 42 and the values of the angular orientation of each ply 14, 16, and 18 which correspond to the acceptable responses.

In a first variation of the second implementation of the method of the invention, the assembly 28 consists essentially of at least two curved structures 10, 30, 32, and 34, and the at least two curved structures are generally right-circular annular cylinders 10, 30, 32, and 34. It is noted that the rings 32 and 34 are simply short cylinders. In a second variation, the genetic operations of step c) also include at least three different genetic operations chosen from a supplemental genetic operations list consisting of division, stack, swap, adhesion, and aggregation, descriptions of which are found near the end of the specification. In a third variation, the genetic operations of step c) also include at least four different genetic operations chosen from the previously-described supplemental genetic operations list. In a fourth variation, the genetic operations of step c) also include at least five different genetic operations chosen from the previously-described supplemental genetic operations list. In a fifth variation, the genetic algorithm of step c) creates a family of plies having a predetermined number of members in the family, wherein each member has plies whose number and angular orientations are determined from the initial number and the initial values of step c) by performing the genetic operations of step c) on the initial number and the initial values, wherein steps c) and d) are performed for each member, wherein step e) repeats steps c) and d) until responses are acceptable for a prechosen number of members, and wherein step f) chooses as the design of the assembly one of the members having acceptable responses.

In one manner of carrying out the method of the invention, in addition to requiring acceptable responses from block 150 of Figure 4 or block 250 of Figure 5, the following design checks for laminate shells are also employed as additional constraints in defining acceptable responses. Each cylinders extensional stiffness in the axial and hoop directions should be generally equal (i.e., equal within a predetermined difference). Each cylinders flexural stiffness in the axial and hoop directions should be generally equal. Each cylinder's shear stiffness should be greater than a prechosen value (e.g., 2.5E6 psi which is 2.5 times ten to the power of six pounds per square inch). The axial strains at the joint (i.e., interface) of two adjoining cylinders should be generally equal. The hoop strains at the joint of two adjoining cylinders should be generally equal. The axial displacements at the joint of two adjoining cylinders should be generally equal (both in magnitude and in direction). The buckling load of the assembly should be greater than a prechosen value (e.g., 30,000 pounds). The frequency of the assembly with masses should be greater than a prechosen value (e.g. 30 hertz). The load carrying capacity of the assembly should be greater than a prechosen value (e.g., 100,000 pounds). The bending boundary layer of the assembly should be within a prechosen value (e.g., 0.001 inch). The membrane-bending coupling effects of the assembly should be minimized to within a prechosen value.

Annular cylinder 10 is shown in Figure 2 as having three composite laminate plies 18, 16, and 14, wherein ply 18 is the radially-innermost ply and has a ninety-degree angular orientation, wherein ply 16 is the middle ply and has a zero-degree angular orientation, and wherein ply 14 is the radially-outermost ply and has a forty-five-degree angular orientation. Let L0 represent the ply stacking sequence (from the radially-innermost to the radially-outermost ply) of cylinder 10, let 1 represent a zero-degree orientation, let 2 represent a forty-five-degree orientation, and let 3 represent a ninety-degree orientation. Then, the stacking sequence for L0 is: L0 = 3 1 2. Drawing an analogy to genetics, each ply orientation in the stacking sequence can be thought of as a gene, and the string of genes defining L0 can be thought of as the L0 chromosome.

Express the ply stacking sequence of one of the cylinders of the assembly as L. Let L be up to ten plies thick. Choose the possible ply orientations to be zero, plus or minus forty-five, and ninety degrees. Randomly assign ply orientations to the ply stacking sequence while following the known genetic rules for plates such as: a plus forty-five-degree ply must have an over or under lying minus forty-five-degree ply (and vice versa), the two radially-outermost plies must be a plus/minus forty-five pair, the two radially-innermost plies must be a plus/minus forty-five pair, the maximum number of over-lying plies having the same orientation is four, and absent plies are moved to the radially-outermost positions. Assume such choosing yields L = 2 2 1 3 1 2 2 0 0 0, wherein 0 represents an absent ply, 1 represents a ply orientation of zero degrees, 2 2 represents two forty-five-degree plies (the ply furthest from the middle ply in the ply stacking sequence L being the plus forty-five-degree ply and the ply closest to the middle ply in the ply stacking sequence L being the minus forty-five-degree ply), and 3 represents a ply orientation of ninety degrees. Next, likewise create a ply stacking sequence family of, for example, twenty members (L1, L2, ...L20) for this one cylinder. Assume that the first member in the family is L1 and that L1 = 2 2 3 1 1 3 2 2 0 0. After block 140 in Figure 4 or block 240 in Figure 5, if no member (L1 through L20) has generated acceptable responses in block 150 or 250, and following the known genetic rules for plates, the worst performing L is replaced with a duplicate of the best performing L before proceeding to block 130 or 230. Before a genetic operation, L1 is expressed as P1 which stands for parent number one, and after the genetic operation, L1 is expressed as C1 which stands for child number one. The child C1 itself becomes a parent in the next generation (i.e., the next application of a genetic operation on L1) in which P1 is considered to have "died" and does not appear. The known genetic operations of crossover, mutation, and permutation for the ply stacking sequence of composite laminate plates are applied here to the ply stacking sequence L of composite laminate cylinders (or more generally to an assembly of one or more curved structures) each with a probability of at least eighty percent. The inventor-created genetic operations of swap, stack, adhesion, aggregation, and division are applied, for example, after five generations and then with a probability of, for example, no more than fifty percent. The inventor-created genetic operations of swap, stack, adhesion, aggregation, and division provides richness to the design gene pool while maintaining longer-term changes from the known plate genetic operations of crossover, mutation, and permutation applied by the inventors to the ply stacking sequence L of composite laminate cylinders (or more generally to an assembly of one or more curved structures). For an assembly of one or more curved structures, performing at least three different genetic operations from the supplemental genetic operations list consisting of swap, stack, adhesion, aggregation, and division will find global best designs faster and with more certainty than will limiting the genetic operations for the assembly of one or more curved structures to the three known plate genetic operations of crossover, mutation, and permutation. Statistically, the process does better using four and does best using five different genetic operations from the supplemental genetic operations list. The genetic operations performed on each member (L1 through L20) are described below, and it is understood that the resulting ply stacking sequence is expressed, for clarity, without also applying to the resulting ply stacking sequence the known genetic rules for plates such as absent plies being moved to radially-outermost positions, etc.

In crossover, the first n genes of two parent chromosomes are kept and the last m genes of the two parent chromosomes are interchanged. Assume, for illustrative purposes only, that P1 = 1 3 2 2 3 1, P2 = 1 1 1 1 1 1, and n is randomly chosen as 2. Then m = 4, C1 = 1 3 1 1 1 1 and C2 = 1 1 2 2 3 1.

In mutation, the nth gene of a parent chromosome undergoes a random change. Assume, for illustrative purposes only, that P1 = 2 1 2 2 1 3, n is randomly chosen as three, and the third gene is randomly changed to one. Then C1 = 2 1 1 2 1 3. It is noted that the random change can be to any gene in the available gene pool (here, the available gene pool is the permissible angular orientations of the plies).

In permutation, the first n genes of a parent chromosome have their order reversed in the chromosome. Assume, for illustrative purposes only, that P1 = 2 3 1 1 2 2 and n is randomly chosen as four. Then, C1 = 1 1 3 2 2 2. It is noted that if the parent has identical genes, the child will also have the same identical genes (i.e., there will be no change in design).

In swap, the first and last n genes of a parent chromosome are switched and have their order reversed in the chromosome. Assume, for illustrative purposes only, that n is randomly chosen as two and P1 = 1 2 1 1 3 2. Then, C1 = 2 3 1 1 2 1.

In stack, one randomly-chosen gene is added to the end of a parent chromosome. Assume, for illustrative purposes only, that P1 = 1 1 1 1 1 1 and that the randomly-chosen gene is 3. Then, the resulting child is C1 = 1 1 1 1 1 1 3.

In adhesion, a gene sequence, randomly chosen from a chromosome pool (to be discussed under aggregation), is added to the end of a parent chromosome. Assume, for illustrative purposes only, that the gene sequence is 2 1 1 3 2 2 and that P1 = 3 3 3 3 3 3. Then, the resulting child is expressed as C1 = 3 3 3 3 3 3 2 1 1 3 2 2.

In aggregation, duplicates of all members with a common property (such as members whose genes are the same within a chromosome) are mathematically gathered to form an aggregate set and then genes are randomly chosen from the set to create a chromosome pool of gene sequences used for the genetic operation of adhesion. Assume, for illustrative purposes only, that there are only two such members, P1 = 1 1 1 1 1 1 and P2 = 3 3 3 3 3 3. Then, the chromosome pool would include gene sequences such as 1 1 3 1 3 1 and 3,1,1,3,1,3 and 3 3 1 1 3 1, etc.

In division, a single parent is broken apart, at the nth gene, into two shorter children. Assume, for illustrative purposes only, that P1 = 1 1 1 1 1 1 2 3 1 3 and that n is randomly chosen as six. Then, the two children would be C1 = 1 1 1 1 1 1 and C2 = 2 3 1 3.

## Claims

1. A method for designing an assembly (28) of one or more curved structures (10, 30, 32, and 34), wherein the curved structures consist essentially of composite laminate plies (14, 16, and 18), wherein each ply has an angular orientation, and wherein the method comprises the steps of:
a) modeling the assembly in a digital computer program which calculates responses of the assembly to predetermined loads on the assembly based on generalized shell theory with shear deformation; wherein the predetermined loads and the values of the angular orientation of each ply are program inputs, and wherein the responses are program outputs;
b) determining values for the angular orientation of each ply from a genetic algorithm for composites which performs genetic operations of permutation, crossover, and mutation first on preselected initial values and thereafter on last-determined values of the angular orientation of each ply;
c) running the computer program from step a) with the values from step b);
d) repeating steps b) and c) until the responses are acceptable; and
e) choosing as the design of the assembly the values of the angular orientation of each ply which correspond to the acceptable responses.

2. The method of claim 1, wherein the genetic operations of step b) also include at least three different genetic operations chosen from a supplemental genetic operations list consisting of division, stack, swap, adhesion, and aggregation.

3. The method of claim 2, wherein the genetic operations of step b) also includes at least four different genetic operations chosen from the supplemental genetic operations list.

4. The method of claim 3, wherein the genetic operations of step b) also includes five different genetic operations chosen from the supplemental genetic operations list.

5. The method of claim 1, wherein the genetic algorithm of step b) creates a family of plies having a predetermined number of members in the family, wherein each member has plies whose angular orientations are determined from the initial values of step b) by performing the genetic operations of step b) on the initial values, wherein steps b) and c) are performed for each member, wherein step d) repeats steps b) and c) until responses are acceptable for a prechosen number of members, and wherein step e) chooses as the design of the assembly one of the members having acceptable responses.

6. A method for designing an assembly (28) of one or more curved structures (10, 30, 32, and 34), wherein the curved structures consist essentially of composite laminate plies (14, 16, and 18), wherein each ply has an angular orientation, and wherein the method comprises the steps of:
a) geometrically dividing the assembly into sections, wherein a single section has the same number of plies, and wherein contiguous sections have different numbers of plies
b) modeling the assembly in a digital computer program which calculates responses of the assembly to predetermined loads on the assembly based on generalized shell theory with shear deformation; wherein the predetermined loads, the number of plies in each section, and the values of the angular orientation of each ply are program inputs, and wherein the responses are program outputs;
c) determining a number of plies in each section and values for the angular orientation of each ply from a genetic algorithm for composites which performs genetic operations of permutation, crossover, and mutation first on a preselected initial number of plies in each section and on preselected initial values of the angular orientation of each ply and thereafter on a last-determined number of plies in each section and on last-determined values of the angular orientation of each ply;
d) running the computer program from step b) with the number of plies in each section and the values for the angular orientation of each ply from step c);
e) repeating steps c) and d) until the responses are acceptable; and
f) choosing as the design of the assembly the number of plies in each section and the values of the angular orientation of each ply which correspond to the acceptable responses.

7. The method of claim 6, wherein the genetic operations of step c) also include at least three different genetic operations-chosen from a supplemental genetic operations list consisting of division, stack, swap, adhesion, and aggregation.

8. The method of claim 7, wherein the genetic operations of step c) also includes at least four different genetic operations chosen from the supplemental genetic operations list.

9. The method of claim 8, wherein the genetic operations of step c) also includes five different genetic operations chosen from the supplemental genetic operations list.

10. The method of claim 6, wherein the genetic algorithm of step c) creates a family of plies having a predetermined number of members in the family, wherein each member has plies whose number and angular orientations are determined from the initial number and the initial values of step c) by performing the genetic operations of step c) on the initial number and the initial values, wherein steps c) and d) are performed for each member, wherein step e) repeats steps c) and d) until responses are acceptable for a prechosen number of members, and wherein step f) chooses as the design of the assembly one of the members having acceptable responses.

11. The method of any one of claims 1 to 10, wherein the assembly consists of at least two curved structures.

12. The method of any one of claims 1 to 10, wherein said at least two curved structures each are generally annular right-circular cylinders.
